# DEMANDE DE BREVET EUROPEEN

(11) **EP 0 779 462 A1**
(43) Date de publication de la demande: **18.06.1997**
(21) Numéro de dépôt: 96402664.5
(22) Date de dépôt: 09.12.1996
(51) Int. Cl.: F16L 25/00

(54) **Raccord hydraulique a continuité électrique**

(30) Priorité: 11.12.1995 FR 9514626
(71) Demandeur: ELECTRICITE DE FRANCE Service National, 75008 Paris (FR)
(72) Inventeur: Gorse, Michel, 77810 Thomery (FR); Laurent, Marie-Hélène, 77810 Thomery (FR)
(74) Mandataire: Dubois-Chabert, Guy

(57) **Abrégé**

Le raccord hydraulique permet d'assurer la continuité électrique dans des dispositifs échangeurs thermiques chauffés électriquement.

On utilise des contacts à lamelles (25) placés entre deux brides de connexion (6S, 6I), chacune fixée à une canalisation (1). Le serrage des deux brides (6S, 6I) provoque le contact forcé des lamelles (25) contre la face radiale (9) de la bride de connexion, placée en regard (6S).

Application aux échangeurs thermiques utilisés pour le chauffage des fluides, par exemple, dans l'industrie agro-alimentaire, par exemple pour pasteuriser ou stériliser des produits alimentaires.

## Description

### Domaine de l'invention

L'invention concerne le chauffage des fluides circulant dans une canalisation chauffée par effet Joule.

### Art antérieur et problème posé

Dans de nombreux procédés industriels, on est amené à chauffer des fluides divers. Les méthodes de chauffage de tels fluides utilisent en général des échangeurs à canalisations, des échangeurs à plaques, ou l'injection de vapeurs.

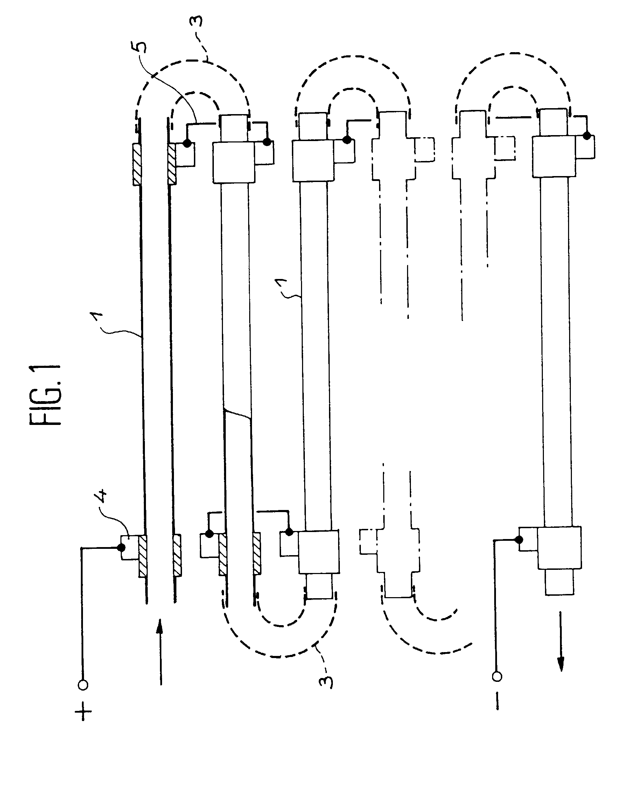

En référence à la figure 1, dans les échangeurs à canalisations, la surface d'échange est composée de plusieurs tronçons comprenant chacun une canalisation 1. Elle est parcourue par un courant électrique qui est de l'ordre de quelques centaines d'Ampères. Le produit à traiter circule dans la canalisation 1, puis traverse un connecteur pour passer d'un tronçon à un autre par l'intermédiaire d'un coude 3 à 180°. L'assemblage de la canalisation 1 et du coude 3 est donc obtenu par des brides ou des raccords démontables, non représentés. Chaque jonction entraîne la rupture du circuit électrique. La continuité électrique est assurée par un shunt 5 qui court-circuite chaque coude 3. Ceci est un avantage lorsque l'on doit chauffer des fluides très thermosensibles, puisque la chaleur générée dans les canalisations droites est très homogène. Par contre, il existe des applications où il est très intéressant d'avoir un enchaînement électrique sur toute la longueur du parcours du fluide dans les canalisations 1 et 2. Le but de l'invention est donc de proposer un raccord hydraulique permettant une telle continuité électrique sur tous les circuits de canalisations.

### Résumé de l'invention

L'objet principal de l'invention est donc un raccord hydraulique à continuité électrique entre deux canalisations à maintenir bout à bout pour assurer leur continuité hydraulique et électrique, ce raccord comprenant :
- un joint annulaire élastique placé entre les deux canalisations ;
- des moyens de serrage l'une contre l'autre des deux canalisations ;
- des moyens de connexion électrique constitués de lames métalliques maintenues inclinées élastiquement entre les deux canalisations qui sont serrées l'une contre l'autre.

Dans une réalisation principale, les lames métalliques sont des lamelles placées en plusieurs groupes de plusieurs lamelles parallèles entre elles dans chaque groupe, ces groupes étant répartis autour de l'axe des canalisations.

Le joint est placé à l'intérieur des lames dans toutes ces réalisations.

De préférence, les moyens de serrage sont constitués d'un dispositif de serrage rapide par colliers.

### Liste des figures

L'invention et ses différentes caractéristiques techniques seront mieux comprises à la lecture de la description suivante de plusieurs réalisations de l'invention, accompagnée de plusieurs figures qui représentent respectivement :
- figure 1, la disposition générale d'un dispositif de l'art antérieur ;
- figure 2, en vue éclatée et en coupe partielle, une première réalisation du dispositif selon l'invention ; et
- figure 3, en vue cavalière et partielle, un agrandissement partiel de la figure 2.

### Description détaillée de plusieurs réalisations de l'invention

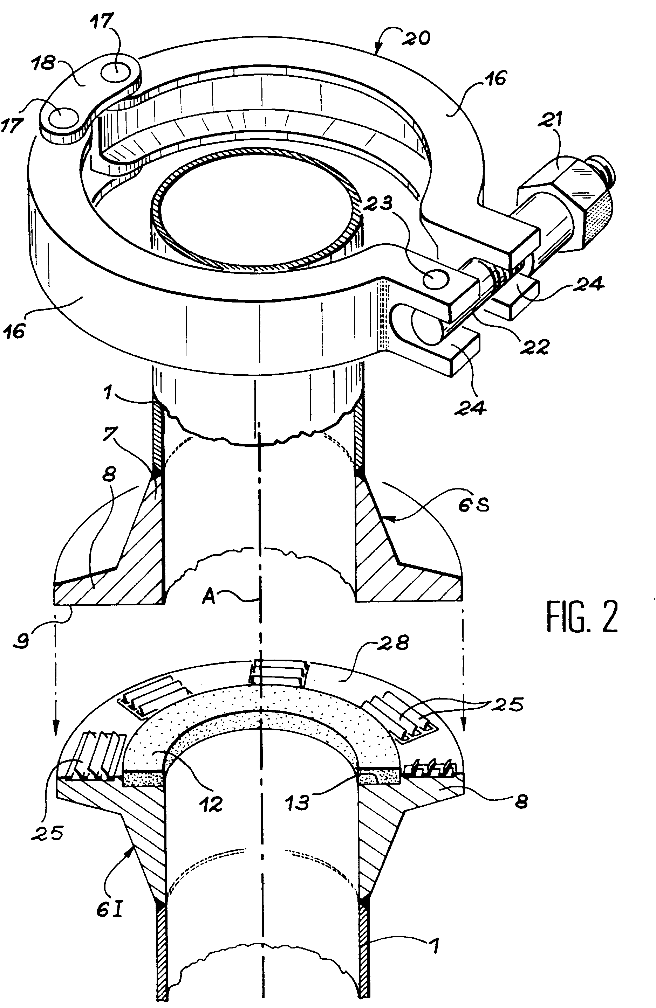

En référence à la figure 2, on retrouve une canalisation supérieure 1. L'axe A a été également figuré. Celle-ci est solidaire d'une bride de serrage 6S supérieure comportant un manchon 7 contre lequel la canalisation 1 est soudée et une collerette 8 faisant saillie à l'extérieur. De façon similaire, une canalisation inférieure 1, représentée sur le bas de la figure, est également soudée contre une autre bride de serrage 61 inférieure. Par contre, cette deuxième bride de serrage 61 comporte une cavité 13 sur sa face radiale 14 qui est perpendiculaire à l'axe longitudinal A des canalisations 1. Cette face radiale 14 est destinée à être placée en regard de la face radiale 9 de la première bride de serrage 6S. Dans cette cavité 13, est placé un joint d'étanchéité 12 qui est légèrement élastique, comme un joint torique. Ce joint d'étanchéité 12 a donc pour fonction d'assurer l'étanchéité hydraulique entre les deux canalisations 1 à joindre bout à bout pour assurer la continuité hydraulique du système. L'épaisseur du joint 12 est très légèrement supérieure à la profondeur de la cavité 13. La section rectangulaire du joint 12 répond aux normes agro-alimentaires.

Sur le bas de la figure 2, on peut remarquer une surface 28 de contact comportant des groupes de lamelles de contact 25 disposées parallèlement les unes par rapport aux autres dans un même groupe. Ces lamelles 25 sont métalliques et possèdent donc une élasticité relative, de sorte que, lorsque les deux brides de serrage 6S et 61 sont rapprochées l'une de l'autre, rapprochant ainsi les deux canalisations 1 à mettre bout à bout, elles se trouvent écrasées légèrement. Compte tenu de ce fait, leur élasticité globale fournit une force sur les faces radiales 9 et 28 des brides de serrage 6S et 6I. Ceci assure un contact électrique intime entre ces deux brides de serrage 6S et 61 et ainsi entre les deux canalisations 1.

En référence à la partie supérieure de cette figure 2, le serrage des deux brides de serrage 6S et 61 est assuré par des moyens de serrage qui sont, pour cette réalisation, constitués par un dispositif de serrage rapide par collier 20. Celui-ci comprend deux bras 16 montés pivotants chacun autour d'un axe de pivotement respectif 17, parallèle à l'axe A du dispositif, les deux axes de pivotement 17 étant maintenus fixes et parallèles l'un par rapport à l'autre, grâce à deux entretoises 18. Le pivotement respectif des deux bras 16 permet au dispositif de serrage rapide de s'écarter et de venir enserrer les deux brides de serrage 6S et 6I. En effet, l'intérieur des deux bras est constitué d'une rainure 19 large et profonde, permettant ainsi de recevoir les deux collerettes 8 des brides 6S et 61. Le serrage de ce dispositif est obtenu au moyen d'un écrou 21 vissé sur une vis 22, elle-même montée pivotante autour d'un axe de pivotement 23, lui-même parallèle à l'axe principal A du dispositif et aux axes de pivotement 17 des bras 16. Cet axe de pivotement 23 de la vis 22 est monté fixe à l'extrémité d'un des bras 16, dans une encoche 24. L'extrémité de l'autre bras 16 comporte également une encoche 24 permettant à la vis 22 d'y être introduite. Le serrage de l'écrou 21 rapproche donc les deux extrémités des bras 16 et assure le serrage de l'ensemble.

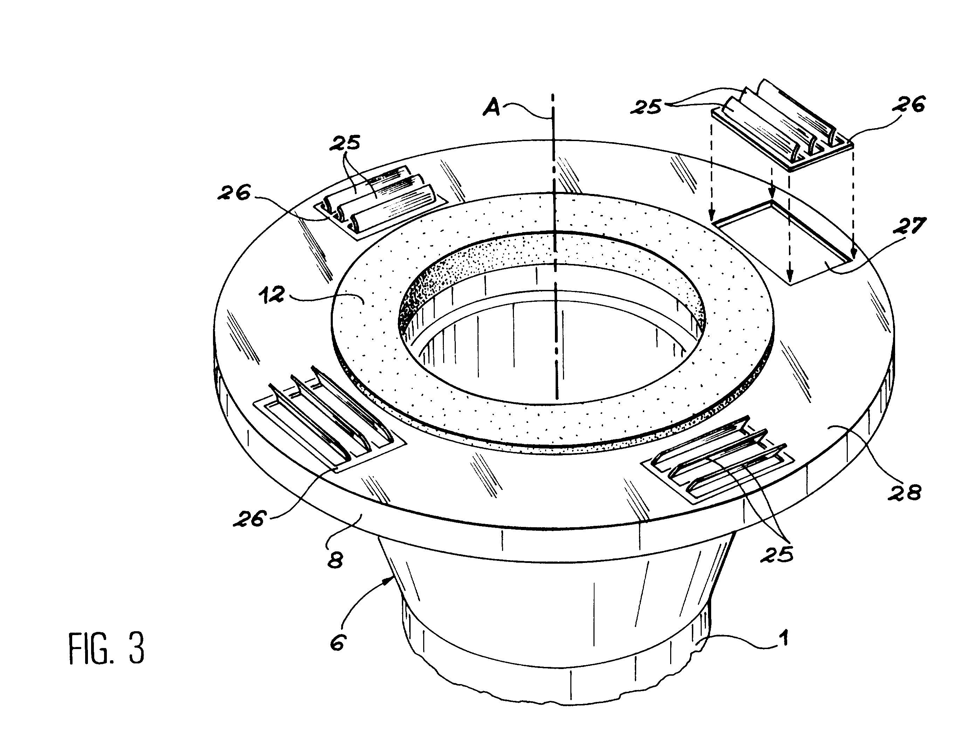

Sur la figure 3, on constate que les lamelles métalliques 25 sont formées dans une plaque métallique 26 complètement plate au préalable. Ces lamelles 25 sont parallèles les unes par rapport aux autres et sont produites par des découpages longitudinaux dans la plaque 26 et décollées ultérieurement, pour obtenir une fente qui s'apparente à une persienne. Chaque lame 26 déformée et comportant donc des lamelles 25 est placée dans une cavité de positionnement 27 pratiquée, par exemple par fraisage, sur la face radiale 28 d'une des deux brides de serrage. On utilise ainsi plusieurs plaques 26, par exemple 4, placées angulairement chacune à 90° les unes par rapport aux autres. Le serrage des deux brides de serrage 6 provoque la compression des lamelles 25 et la connexion électrique intime entre les deux brides de serrage 6.

Ces lamelles 25 ont été représentées en parallèle les unes par rapport aux autres, chacune sur une plaque 26, et parallèles à un axe perpendiculaire à l'axe A de la canalisation. Ceci n'est qu'une forme de réalisation possible. On peut également envisager des lamelles métalliques pratiquées dans ces mêmes plaques métalliques, mais positionnées perpendiculairement par rapport à celles 26 représentées sur cette figure 3. On pourrait également envisager d'utiliser une couronne radiale à appliquer sur la face radiale 28 d'une des brides de serrage 6 et dans laquelle on pratiquerait des ouvertures pour obtenir des lamelles orientées radialement par rapport à l'axe A, sur tout le tour de la bride de serrage.

Le nombre de lamelles 25 réunies sur une plaque 26 est fonction du diamètre des canalisations et de l'intensité électrique à faire passer entre celles-ci. Au cas où des pressions de fonctionnement importantes, par exemple supérieures à 25 bars, c'est-à-dire 2,5.10⁶ Pascals, sont nécessaires les brides de serrage 6S et 61 peuvent être soudées aux canalisations 1. Leur assemblage peut être obtenu par boulonnage.

## Revendications

1. Raccord hydraulique à continuité électrique entre deux canalisations (1), d'axe déterminé (A), à maintenir bout à bout pour assurer la continuité hydraulique et électrique de l'ensemble, le raccord comprenant :
- un joint annulaire élastique (12) placé entre les deux canalisations (1) ;
- des moyens de serrage, des deux canalisations (1) l'une contre l'autre ;
- des moyens de connexion électrique constitués de contacts à lamelles métalliques (11, 25), maintenues inclinées élastiquement entre les deux canalisations (1) qui sont serrées l'une contre l'autre.

2. Raccord hydraulique selon la revendication 1,
caractérisé en ce que les lames sont des lamelles (25) métalliques, placées en plusieurs groupes sur des plaques (26) de plusieurs lamelles (25) parallèles entre elles et réparties autour de l'axe (A) des canalisations (1).

3. Raccord hydraulique selon la revendication 1,
caractérisé en ce que le joint (12) est placé à l'intérieur des lames (11) ou des lamelles (25).

4. Raccord hydraulique selon la revendication 1,
caractérisé en ce que les moyens de serrage sont constitués d'un dispositif de serrage rapide par collier (20).

5. Raccord hydraulique selon la revendication 1,
caractérisé en ce que les moyens de serrage sont constitués d'un serrage par boulonnage.
